# EUROPEAN PATENT APPLICATION

(11) **EP 2 073 357 A1**
(43) Date of publication of application: **24.06.2009**
(21) Application number: 08171424.8
(22) Date of filing: 12.12.2008
(51) Int. Cl.: H02K 5/15

(54) **Motor Assembly**

(30) Priority: 21.12.2007 US 962177
(71) Applicant: General Electric Company, Schenectady, NY 12345 (US)
(72) Inventor: Ley, Bruce Calvin, Ossian, IN 46777 (US)
(74) Representative: Illingworth-Law, William Illingworth

(57) **Abstract**

A motor (10) includes a rotor core (16) and a stator core (18) disposed about the rotor core (16). The stator core (18) includes three support portions and at least one end bracket supporting the stator core (18) solely by three mounting portions (54) that are interconnected with a respective support portion. A method of mounting an end shield (22) to a laminated motor (10) stator core (18) is also presented.

## Description

### Background of the Invention

### Field of the Invention

The subject matter described herein relates generally to motors and, more particularly, to electric motor support structures.

### Related Art

Support structures for laminated stators and rotors of electric motors are known. In one general construction, end brackets or end shields are mounted to opposing ends of the stator and the rotor. For example, U.S. Patent No. 5,929,545 illustrates an end shield for mounting on a stack of laminations forming the stator of an electric motor. The end shield has an inner face facing the stack, with four mounting openings alignable with four holes extending into the stack, and a spacer on the inner face adjacent at least one of the openings to space the inner face from the stack so that a threaded fastener extending through the mounting opening and into a hole in the stack can more readily pull material surrounding the hole upwardly to form a protuberance on the stack to engage and resist movement of the end shield relative to the stack.

In another example, U.S. Patent No. 4,306,168 describes a system that involves the use of self-tapping screws that are inserted through enlarged holes provided in the end shield into mating holes provided in the end face of the core of the stator assembly. During assembly, fasteners are tightened to securely draw the end shield into firm gripping engagement with the end face of the stator core while the desired uniform air gap between the rotor and the bore of the stator assembly is maintained.

However, the above constructions suffer from numerous deficiencies including that the end shield must be closely machined to ensure alignment of the rotor and stator and assembly time and/or cost is relatively high, accordingly, to date, no suitable device or method of motor construction is available.

### Brief Description of the Invention

In accordance with an embodiment of the present invention a motor comprises a rotor core and a stator core disposed about the rotor core. The stator core comprises three support portions and at least one end bracket supporting the stator core solely by three mounting portions that are interconnected with a respective support portion.

In another aspect of the invention, a method of mounting an end shield to a laminated motor stator core, comprises providing a stator core comprising three support portions extending through each of a plurality of laminations of a motor stator core; providing three fasteners; providing an end shield comprising three mounting portions; and securing each of the fasteners solely to a respective one of the three mounting portions and the support portions.

### Brief Description of the Drawings

The following detailed description is made with reference to the accompanying drawings, in which:

Figure 1 is a perspective view of a motor in accordance with one embodiment of the present invention;

Figure 2 is a side view of the motor of Figure 1;

Figure 3 is an exploded and enlarged view of the motor of Figure 1;

Figure 4 is a diagram showing alignment of a rotor and a stator of the motor of Figure 1; and

Figure 5 is a top view of a stator lamination of the motor of Figure 1.

### Detailed Description of the Preferred Embodiment

One embodiment of the present invention concerns a device and a method of motor construction wherein, e.g., alignment problems and assembly time and/or cost is significantly reduced. In one aspect of the invention, a stator core and a rotor core are provided and at least one end bracket supports the stator core solely by three mounting portions that are interconnected with a respective support portion of the stator core.

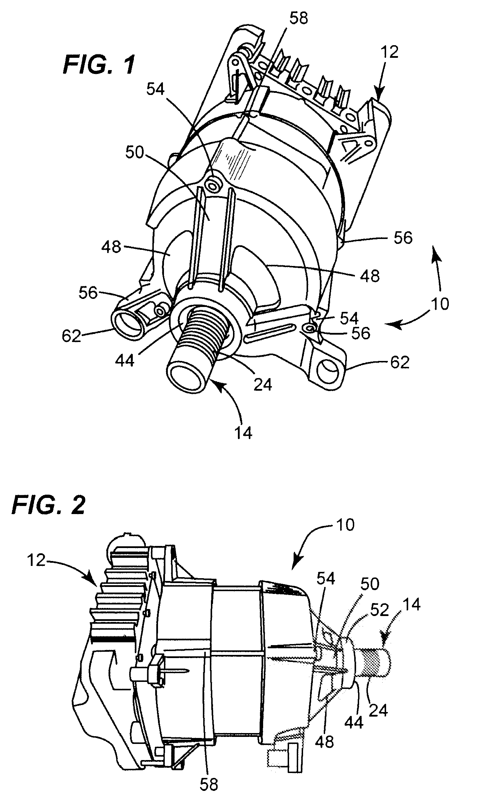

Referring now to Figures 1 through 3, a motor in accordance with one embodiment of the present invention is illustrated generally at 10. In this embodiment, the motor 10 comprises motor controller electronics 12, an axle 14, a rotor core 16, a stator core 18, a pair of end brackets comprising a working end shield 20 and a controller end shield 22.

The motor controller electronics 12 may comprise any well-known and suitable devices for controlling the motor 10. In a usual manner, output torque from the motor 10 is carried by axle 14 which may be grooved at 24 for receiving a correspondingly configured belt (not shown).

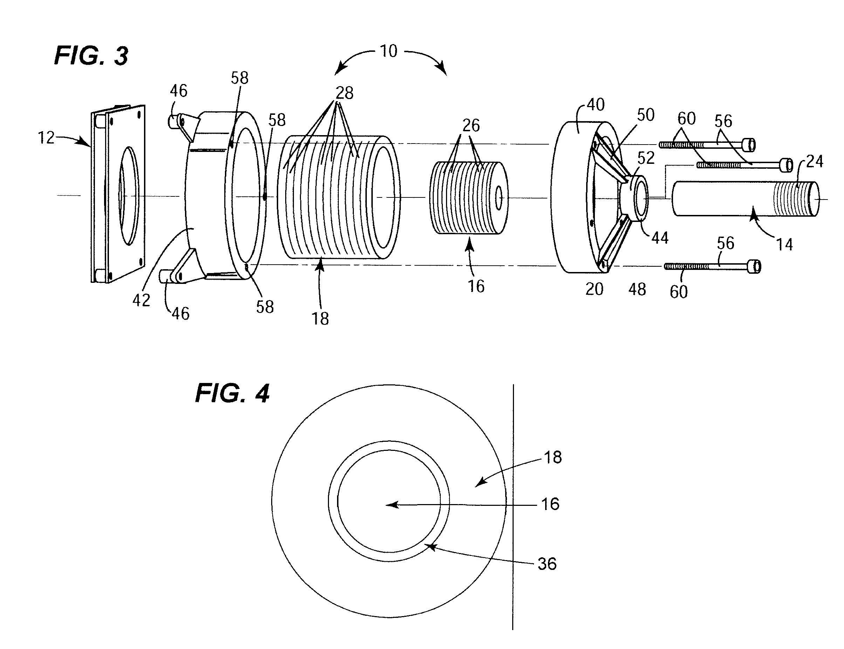

As best seen in Figure 3, the rotor core 16 may comprise laminations 26 of a ferromagnetic material and, e.g., may also be encapsulated in aluminum. Further, bands (not shown) of aluminum or copper may be located on the rotor core 16 to function as windings in a known manner.

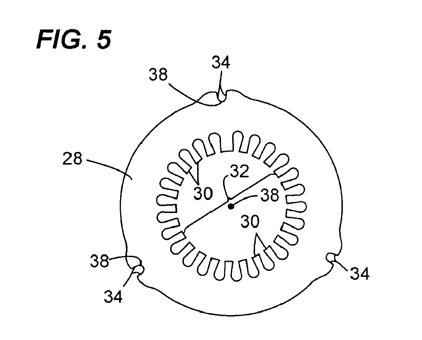

The stator core 18 may comprise a number of laminations 28 of a ferromagnetic material, an example of which is shown in detail in Figure 5. Each lamination 28 may comprise a plurality of posts 30 ringing a central aperture 32 and notched portions 34. The posts 30 are configured in a known manner for receiving stator windings (not shown). Referring now also to Figure 4, the central aperture 32 is dimensioned to receive the rotor 16 while also leaving a required gap 36.

Referring again to Figure 5, the lamination 28 comprises three notched portions 34 which may be spaced by approximately 120 degrees about the circumference of the lamination and about a rotational axis 38. It will be understood that while notched portions 34 are shown in a generally semi-circular configuration, other configurations are contemplated including a smaller or a larger arc portion 38. In addition, fully circular closed apertures rather than notched portions may also be employed, although, such a structure would likely increase assembly time and/or cost.

Referring now to Figure 3, the working end shield 20 and the controller end shield 22 may each comprise aluminum and may be cast. In this embodiment, the end shields 20 and 22 each comprise a respective elongated tubular shield portion 40 and 42 that prevents injury in the event of a motor break down. Each may also comprise a bearing 44 that supports the axle 14. The end shield 22 comprises a number of mounts 46 whereto the motor controller electronics 12 may be connected.

As also seen in Figures 1 and 2, the end shield 20 comprises a plurality of apertures 48 spaced apart by ribbed support members 50 that interconnect the shield portion 40 and a collar 52 containing the bearing 44. Mounting portions 54 are provided which comprise mounting bores (not numbered) wherethrough elongated fasteners 56 may extend. The end shield 22 comprises mounting portions 58 including, e.g., threaded bores (not numbered) whereto the fasteners 56 may be connected. The fasteners 56 may each comprise a bolt having a threaded portion 60. A pair of trunions 62 may extend from the end shield 20 for mounting the motor 10 to a frame (not shown).

During assembly, the fasteners 56 may be inserted through the mounting portions 54 passing adjacent the notched portions 34 and into the mounting portions 58. Through proper alignment of the mounting portions 54 and 58 and the notched portions 34, the proper gap 36 (Figure 4) is assured.

The exemplary embodiment of an end shield with three mounting portions has numerous advantages relative to that with four mounting portions. For example, since three points define a plane, the alignment during assembly of each of three mounting portions is enhanced relative to that of four mounting portions which may define multiple planes without highly precise machining. Accordingly, there is no stress or distortion of an endshield with a three mounting portions that may occur during assembly of an endshield to a motor with a four mounting portions.

Where the end shield is machined at each of the three mounting portions and a machining clamping fixture is configured to reference these mounting portions, nearly perfect bearing pocket alignment can be accomplished. If machining is instead carried out for four mounting portions, greater likelihood of distortion occurs during assembly of the end shield to a motor since the additional aligning of all four mounting portions, which may define multiple planes, on one plane is necessary.

Also, with three mounting portions, an end shield easily lends itself to nesting of motor laminations in a stator die and, further, it will be appreciated that the cost associated with assembly of a fourth bolt is saved.

While the present invention has been described in connection with what are presently considered to be the most practical and preferred embodiments, it is to be understood that the present invention is not limited to these herein disclosed embodiments. Rather, the present invention is intended to cover all of the various modifications and equivalent arrangements included within the spirit and scope of the appended claims.

## Claims

1. A motor (10), comprising:
a rotor core (16);
a stator core (18) disposed about the rotor core (16) and the stator core (18) comprising three support portions; and
at least one end bracket supporting the stator core (18) solely by three mounting portions (54) which are interconnected with a respective support portion.

2. The motor (10) of claim 1, wherein:
the at least one end bracket comprises a pair of end brackets;
each mounting portion (58) comprises a mounting aperture;
the three support portions each comprise a notched portion (34); and further comprising three elongated fasteners (56), wherein each elongated fastener (56) is disposed through a respective end bracket mounting aperture and one of the three notched portions (34).

3. The motor (10) of claim 1 or claim 2, wherein the motor (10) comprises a rotational axis and each mounting aperture and each notched portion (34) is generally equally circumferentially spaced at approximately 120 degrees about the rotational axis.

4. The motor (10) of any one of the preceding claims, wherein each end bracket comprises an end shield (22) and wherein each notched portion (34) comprises a generally semi-circular configuration.

5. The motor (10) of claim 4, wherein one of the end shields (22) comprises a pair of trunions (62).

6. The motor (10) of any one of the preceding claims, wherein the stator (18) comprises laminations (26) and the notched portions (34) extend through each lamination.

7. The motor (10) of claim 4, wherein each of the end shields (22) comprise a bearing (44) that rotationally supports the rotor via an axle (14).

8. The motor (10) of any one of claims 2 to 7, wherein each of the fasteners (56) comprises a bolt.

9. A method of mounting an end shield (22) to a laminated motor (10) stator core (18), comprising:
providing a stator core (18) comprising three support portions extending through each of a plurality of laminations of a motor (10) stator core (18);
providing three fasteners (56);
providing an end shield (22) comprising three mounting portions (54); and
securing each of the fasteners (56) solely to a respective one of the three mounting portions (54) and the support portions.

10. The method of claim 9, wherein the support portions comprise notches (34) which extend through all of the laminations (26) of the motor stator core (18).

11. The method of claim 9 or claim 10, wherein each of the fasteners comprises a bolt.

12. The method of any one of claims 9 to 11, wherein each of the mounting portions comprise a mounting bore.
